# EUROPÄISCHE PATENTANMELDUNG

(11) **EP 4 667 669 A1**
(43) Veröffentlichungstag der Anmeldung: **24.12.2025**
(21) Anmeldenummer: 25170764.2
(22) Anmeldetag: 15.04.2025
(51) Int. Cl.: E03C 1/186, A47J 47/20

(54) **ADAPTER FÜR EIN ZUBEHÖRTEIL EINES SANITÄRBECKENS, SANITÄRTEIL SOWIE SYSTEM**

(30) Priorität: 21.06.2024 DE 102024205814
(71) Anmelder: BLANCO GmbH + Co KG, 75038 Oberderdingen (DE)
(72) Erfinder: Lebedkin, Mikhail, 76703 Kraichtal (DE); Hütter, Jens, 75038 Oberderdingen (DE); Flaig, Marco, 70193 Stuttgart (DE); Kahl-Marburger, Georg, 74172 Neckarsulm (DE); Funke, Thomas, 75031 Eppingen (DE)
(74) Vertreter: Ullrich & Naumann PartG mbB

(57) **Zusammenfassung**

Die Erfindung betrifft einen Adapter für ein Zubehörteil eines Sanitärbeckens, insbesondere für ein Zubehörteil eines Spülbeckens, umfassend eine Aufnahmeeinrichtung zum Aufnehmen des Zubehörteils und zumindest zwei Anlageelemente mit jeweils einem Fortsatz zur Auflage auf und/oder Anlage an zumindest einem, insbesondere schrägen, Rand des Sanitärbeckens, wobei eine maximale Erstreckung zumindest einer der Fortsätze eine Richtung definiert, entlang derer die Erstreckung des zumindest einen Fortsatzes kleiner ist als die Erstreckung des Adapters in dieselbe Richtung.

## Beschreibung

Die Erfindung betrifft einen Adapter für ein Zubehörteil eines Sanitärbeckens, umfassend eine Aufnahmeeinrichtung zum Aufnehmen des Zubehörteils.

Die Erfindung betrifft weiter ein Sanitärteil, umfassend einen Adapter.

Die Erfindung betrifft weiter ein System aus zumindest einem Sanitärteil und zumindest einem weiteren Zubehörteil.

Die Erfindung betrifft weiter ein Sanitärbecken mit einem System.

Obwohl die Erfindung allgemein auf Adapter für Zubehörteile von Sanitärbecken anwendbar ist, wird die folgende Erfindung in Bezug auf Adapter für Zubehörteile von Küchenspülen erläutert.

Bei Küchenspülen ist es bekannt geworden, Zubehörteile vorzusehen, die auf der Küchenspüle angeordnet werden. Beispielsweise können diese Zubehörteile auf umlaufenden Kanten in der Küchenspüle angeordnet werden. Dabei können mehrere umlaufende Kanten auf unterschiedlichen Höhen vorgesehen sein, sodass mehrere Zubehörteile gegeneinander verschiebbar sind und/oder übereinander hinwegbewegt werden können, was beispielsweise aus der US 2015/0067962 A1 bekannt geworden ist.

An einer solchen Konstruktion ist jedoch nachteilig, dass mehrere Stufen für die umlaufenden Kanten vorgesehen werden müssen, sodass sich der Platzbedarf der Küchenspüle vergrößert. Außerdem ist die Herstellung aufwendig.

Aus der WO 2023/034981 A1 ist es ebenfalls bekannt geworden, mehrere Zubehörteile auf einer gemeinsamen umlaufenden Kante vorzusehen. Diese haben jedoch einen erhöhten Platzbedarf, da die Zubehörteile nebeneinander auf der umlaufenden Kante angeordnet werden. Wenn hingegen die Zubehörteile übereinander angeordnet werden, hat lediglich das unterste Zubehörteil einen sicheren Halt, da gegebenenfalls die anderen Zubehörteile auf den unteren Zubehörteilen aufliegen und an der Kante in vertikaler Richtung verrutschen können. Außerdem hat auch diese Anordnung einen erhöhten Platzbedarf, da die Zubehörteile in die Höhe gestapelt werden. Zudem können die unteren Zubehörteile lediglich eine sehr geringe Höhe aufweisen.

Eine Aufgabe der vorliegenden Erfindung ist es daher, einen Adapter für ein Zubehörteil eines Sanitärbeckens bereitzustellen, der auf einfache und platzsparende Weise zusammen mit anderen Zubehörteilen und/oder Sanitärteilen auf einem Sanitärbecken anordenbar ist. Weiterhin soll der Adapter für das Zubehörteil vielseitig einsetzbar sein. Eine weitere Aufgabe der vorliegenden Erfindung ist es, ein Sanitärteil, ein System aus einem Sanitärteil und einem weiteren Zubehörteil und ein Sanitärbecken bereitzustellen, bei dem eine einfache und platzsparende Anordnung der Zubehörteile ermöglicht wird.

Eine weitere Aufgabe der vorliegenden Erfindung ist es, einen alternativen Adapter für ein Zubehörteil, ein alternatives Sanitärteil, ein alternatives System und ein alternatives Sanitärbecken bereitzustellen.

In einer Ausführungsform löst die vorliegende Erfindung die vorstehend genannten Aufgaben mit einem Adapter für ein Zubehörteil eines Sanitärbeckens, insbesondere für ein Zubehörteil eines Spülbeckens, umfassend eine Aufnahmeeinrichtung zum Aufnehmen des Zubehörteils und zumindest zwei Anlageelemente mit jeweils einem Fortsatz zur Auflage auf und/oder Anlage an zumindest einem, insbesondere schrägen, Rand des Sanitärbeckens, wobei eine maximale Erstreckung zumindest einer der Fortsätze eine Richtung definiert, entlang derer die Erstreckung des zumindest einen Fortsatzes kleiner ist als die Erstreckung des Adapters in dieselbe Richtung.

In einer Ausführungsform löst die vorliegende Erfindung die vorstehend genannten Aufgaben mit einem Sanitärteil, umfassend einen Adapter gemäß einem der Ansprüche 1 bis 10, wobei ein Zubehörteil eines Sanitärbeckens an und/oder in der Aufnahmeeinrichtung angeordnet ist.

In einer Ausführungsform löst die vorliegende Erfindung die vorstehend genannten Aufgaben mit einem System aus zumindest einem Sanitärteil gemäß Anspruch 11 und zumindest einem weiteren Zubehörteil, wobei das weitere Zubehörteil eine Arbeitsfläche und zumindest zwei, insbesondere vier, auf einer Unterseite der Arbeitsfläche angeordnete Füße umfasst, wobei zwischen zwei Füßen in einer Richtung ein Freiraum vorgesehen ist, dessen Erstreckung in der Richtung größer als eine Erstreckung eines Anlageelements und/oder eines Fortsatzes des Adapters in der Richtung ist.

In einer Ausführungsform löst die vorliegende Erfindung die vorstehend genannten Aufgaben mit einem Sanitärbecken, insbesondere einem Spülbecken, mit einem System gemäß Anspruch 12, wobei das Sanitärbecken eine erste Auflagefläche und eine zweite Auflagefläche umfasst, wobei die erste Auflagefläche gegenüber der zweiten Auflagefläche angeordnet ist.

Einer der damit erzielten Vorteile ist, dass die Flexibilität bei der Anordnung von Zubehörteilen wesentlich erhöht wird. Des Weiteren können weitere Zubehörteile auf einfache Weise zusätzlich zu Zubehörteilen im Adapter über dem Adapter angeordnet werden und dabei gleichzeitig einen sicheren Stand auf dem Sanitärbecken gewährleisten. Ein weiterer Vorteil ist, dass der Adapter und weitere Zubehörteile platzsparend auf dem Sanitärbecken anordenbar sind.

Der Begriff "Schräge" ist im weitesten Sinne zu verstehen und bezieht sich, insbesondere in der Beschreibung, vorzugsweise in den Ansprüchen beispielsweise auf eine Fläche, die unter einem Winkel größer als 0 Grad und kleiner als 90 Grad zu einer Ebene entlang der zwei maximalen Erstreckungen des Adapters angeordnet ist. Darunter ist beispielsweise eine Fläche zu verstehen, die unter einem Winkel größer als 0 Grad und kleiner als 90 Grad zu einem horizontalen Untergrund oder Boden angeordnet ist, wenn der Adapter auf dem Untergrund beziehungsweise Boden angeordnet ist.

Weitere Merkmale, Vorteile und weitere Ausführungsformen der Erfindung sind im Folgenden beschrieben oder werden dadurch offenbar.

Gemäß einer vorteilhaften Weiterbildung der Erfindung weist der Adapter einen im Wesentlichen rechteckigen Rahmen auf, wobei der Rahmen jeweils zumindest zwei Querträger und zumindest zwei Längsträger umfasst. Der Rahmen kann als Grundgerüst des Adapters dienen, an dem die Aufnahmeeinrichtung sowie die Anlageelemente festgelegt sind. Ein Vorteil hiervon ist, dass der Adapter auf verschiedenen Sanitärbecken angeordnet werden kann und dass verschiedene Zubehörteile an dem Adapter anordenbar sind.

Gemäß einer weiteren vorteilhaften Weiterbildung der Erfindung sind die Anlageelemente jeweils an einem Querträger angeordnet. Insbesondere können die Anlageelemente einteilig mit dem Querträger verbunden sein. Ein Vorteil hiervon ist, dass die Anlageelemente zusätzlich als Griff für den Adapter genutzt werden können.

Gemäß einer weiteren vorteilhaften Weiterbildung der Erfindung umfassen die Anlageelemente jeweils einen Vorsprung, der insbesondere jeweils eine Schräge aufweist, wobei jeweils einer der Fortsätze an einem der Vorsprünge angeordnet ist. Die Fortsätze können in diesem Fall insbesondere auf einer waagerechten Ebene des Sanitärbeckens angeordnet werden. Ein Vorteil hiervon ist, dass der Adapter sicher auf dem Sanitärbecken angeordnet werden kann. Zudem können die Fortsätze als zuverlässiger Griff für einen Nutzer bereitgestellt werden.

Gemäß einer weiteren vorteilhaften Weiterbildung der Erfindung umfasst die Aufnahmeeinrichtung zumindest einen inneren Vorsprung, insbesondere wobei der innere Vorsprung abgerundet ist, und wobei dieser in einem Eckbereich des Rahmens angeordnet ist. Insbesondere können die inneren Vorsprünge gleichförmig ausgebildet sein. Somit kann ein Zubehörteil beispielsweise zuverlässig in den Adapter eingelegt und dort lösbar festgelegt werden. Ein Vorteil hiervon ist, dass das Zubehörteil auf einfache Weise in dem Adapter angeordnet und ausgetauscht werden kann.

Gemäß einer weiteren vorteilhaften Weiterbildung der Erfindung ist der Rahmen und/oder zumindest eines der Anlageelemente aus Edelstahl und/oder Kunststoff hergestellt. Ein Vorteil hiervon ist, dass der Adapter stabil und gleichzeitig wasserfest ausgebildet ist.

Gemäß einer weiteren vorteilhaften Weiterbildung der Erfindung sind die Querträger und/oder die Anlageelemente mit einem Kunststoff umspritzt. Es ist denkbar, dass die Anlageelemente teilweise oder vollständig mit Kunststoff umspritzt sind. Ein Vorteil hiervon ist, dass eine Haftung zwischen dem Adapter und einem Sanitärbecken erhöht wird.

Gemäß einer weiteren vorteilhaften Weiterbildung der Erfindung weisen die Fortsätze eine Oberseite und eine hierzu parallele Unterseite auf oder die Fortsätze weisen jeweils eine Oberseite und eine Unterseite auf, die jeweils unter demselben Winkel zu einer Haupterstreckungsrichtung der Fortsätze spitz aufeinander zulaufen, insbesondere wobei die Oberseite und die Unterseite jeweils die gleiche horizontale Erstreckung aufweisen. Insbesondere kann ein Winkel zwischen einem Vorsprung und einem angeordneten Fortsatz einem Winkel zwischen dem Rahmen des Adapters und dem Vorsprung entsprechen. Ein Vorteil hiervon ist, dass der Adapter mit der Oberseite und der Unterseite auf dem Sanitärbecken angeordnet werden kann. Mit anderen Worten kann der Adapter umgedreht werden und im umgedrehten Zustand ebenfalls auf dem Sanitärbecken angeordnet werden. Insbesondere durch die Verbindung mit den Schrägen der Vorsprünge kann auf diese Weise der Rahmen des Adapters auf zwei verschiedenen Höhen auf dem Sanitärbecken angeordnet werden.

Es ist ebenfalls denkbar, dass die Unterseite und die Oberseite der Fortsätze nicht parallel sind, sondern beide unter einem Winkel zu der Haupterstreckungsrichtung angeordnet sind. Dabei können die Oberseite und die Unterseite spitz aufeinander zulaufen und denselben Winkel mit der Haupterstreckungsrichtung einschließen. Ein Vorteil hiervon ist, dass der Adapter sowohl mit der Oberseite, als auch mit der Unterseite auf einem schrägen Rand einer Spüle anordenbar ist.

Gemäß einer weiteren vorteilhaften Weiterbildung der Erfindung ist der Adapter stapelbar ausgebildet, sodass zwei Adapter übereinander stapelbar sind, deren Gesamthöhe kleiner ist als die Summe ihrer einzelnen Höhen. Insbesondere können die Schrägen der Vorsprünge derart ausgebildet sein, dass die Rahmen der Adapter aneinander angrenzen, wenn die Adapter übereinandergestapelt sind. Ein Vorteil hiervon ist, dass der Platzverbrauch bei der Aufbewahrung von mehreren Adaptern verringert wird.

Gemäß einer weiteren vorteilhaften Weiterbildung der Erfindung ist die Aufnahmeeinrichtung dazu ausgebildet, das Zubehörteil auf einer Unterseite und auf einer Oberseite der Aufnahmeeinrichtung aufzunehmen. Insbesondere können die inneren Vorsprünge eine geringere Dicke, also im Wesentlichen eine vertikale Erstreckung, als eine Dicke des Rahmens aufweisen und mittig zwischen einer Oberseite und einer Unterseite des Rahmens angeordnet sein. Auf diese Weise kann das Zubehörteil von beiden Seiten des Adapters auf die Aufnahmeeinrichtung gestellt werden. Ein Vorteil hiervon ist, dass ein Zubehörteil auch im umgedreht angeordneten Zustand des Adapters auf beziehungsweise in dem Adapter anordenbar ist.

Gemäß einer weiteren vorteilhaften Weiterbildung der Erfindung ist der Adapter ausgebildet, in einem aufliegenden Zustand, in dem der Adapter mit den Fortsätzen auf der ersten und zweiten Auflagefläche aufliegt, lediglich mit den Fortsätzen in Kontakt mit dem Sanitärbecken zu stehen. Mit anderen Worten entsteht im angeordneten Zustand des Adapters ein Spalt zwischen den Schrägen der Vorsprünge und den korrespondierenden Schrägen des Sanitärbeckens. Ein Vorteil hiervon ist, dass der Adapter einfach in das Sanitärbecken einsetzbar ist und entlang des Sanitärbeckens verschiebbar ist.

Weitere wichtige Merkmale und Vorteile der Erfindung ergeben sich aus den Unteransprüchen, aus den Zeichnungen und aus der dazugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungen und Ausführungsformen der vorliegenden Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile oder Elemente beziehen.

Dabei zeigt in schematischer Form
- Fig. 1: einen Adapter gemäß einer Ausführungsform der vorliegenden Erfindung;
- Fig. 2: einen Querschnitt des Adapters gemäß Figur 1 gemäß einer Ausführungsform der vorliegenden Erfindung;
- Fig. 3: ein Sanitärteil in zwei Anordnungen des Adapters gemäß einer Ausführungsform der vorliegenden Erfindung;
- Fig. 4: ein Sanitärbecken gemäß einer Ausführungsform der vorliegenden Erfindung; und
- Fig. 5: ein Sanitärbecken gemäß einer Ausführungsform der vorliegenden Erfindung.

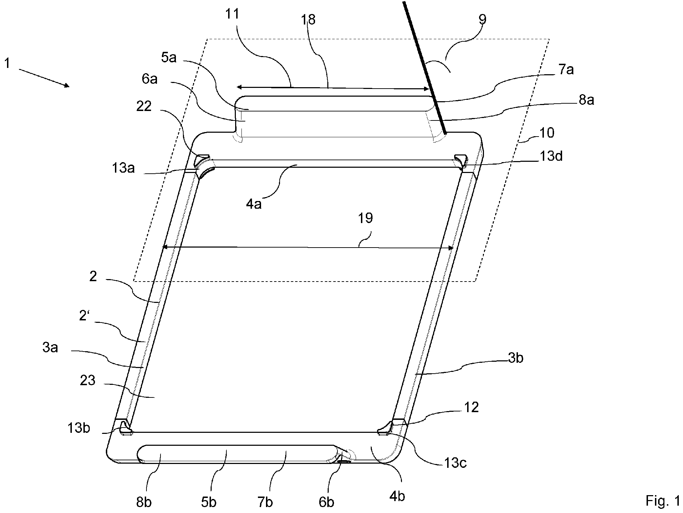

Figur 1 zeigt in schematischer Form einen Adapter gemäß einer Ausführungsform der vorliegenden Erfindung.

Der Adapter 1 umfasst einen im Wesentlichen rechteckigen Rahmen 2. Der Rahmen 2 wird durch zwei Längsstreben 3a, 3b und zwei Querstreben 4a, 4b gebildet und umfasst einen Freiraum 23 innerhalb der Längs- und Querstreben 3a, 3b, 4a; 4b. An den Querstreben 4a, 4b ist jeweils ein Anlageelement 5a, 5b angeordnet, wobei je ein Anlageelement 5a, 5b einen Fortsatz 7a, 7b und einen Vorsprung 6a, 6b umfasst. Die Vorsprünge 6a, 6b sind rechteckförmig ausgebildet und an den Querstreben 4a, 4b entlang ihrer gesamten Länge angeordnet. Es ist ebenfalls denkbar, dass die Vorsprünge 6a, 6b an den Querstreben 4a, 4b lediglich an einem Teilabschnitt der Vorsprünge 6a, 6b angeordnet sind. Beispielsweise können die Vorsprünge 6a, 6b einen Durchbruch aufweisen und lediglich an seitlichen Endbereichen der Vorsprünge 6a, 6b an den Querstreben 3a, 3b angeordnet sein. Die Vorsprünge 6a, 6b weisen weiter jeweils eine Schräge 8a, 8b auf. Das heißt, dass sich die Vorsprünge 6a, 6b unter einem Winkel 9 von einer Ebene 10 durch den Rahmen 2 von dem Rahmen 2 weg erstrecken. Der Winkel 9 kann zwischen 25° und 89°, vorzugsweise zwischen 45° und 80°, insbesondere zwischen 65° und 80°, betragen. Durch den Winkel 9 können mehrere Adapter 1 ineinander gestapelt werden. Insbesondere können die Adapter 1 derart ineinander gestapelt werden, dass deren Rahmen 2 aufeinander aufliegen.

Die Fortsätze 7a, 7b sind rechteckförmig ausgebildet und sind an den Vorsprünge 6a, 6b entlang ihrer gesamten Länge angeordnet. Insbesondere entspricht die Länge der Fortsätze 7a, 7b der Länge der Vorsprünge 6a, 6b.

Die Anlageelemente 5a, 5b weisen jeweils eine maximale Erstreckung 18 auf, die eine Richtung 11 definiert. Die Richtung 11 ist insbesondere parallel zu den Querstreben 4a, 4b orientiert. Die Erstreckung 18 der Anlageelemente 5a, 5b in Richtung 11 ist hier geringer als die Erstreckung 19 des Adapters 1 in derselben Richtung 11. Insbesondere ist die Erstreckung 18 der Anlageelemente 5a, 5b in Richtung 11 geringer als eine Erstreckung der Querstreben 4a, 4b in derselben Richtung. Mit anderen Worten sind die Anlageelemente 5a, 5b lediglich über einen Teilbereich der Querstreben 4a, 4b an den Querstreben 4a, 4b angeordnet.

Es ist ebenfalls denkbar, dass die Anlageelemente 5a, 5b keine erste Vorsprünge 6a, 6b umfassen, sondern lediglich Fortsätze 7a, 7b. In diesem Fall sind die Fortsätze 7a, 7b analog zu den Vorsprüngen 6a, 6b rechteckförmig und mit einer Schräge ausgebildet. Somit kann der Adapter 1 in diesem Fall auf einer Schräge einer Küchenspüle angeordnet werden, da die Fortsätze 7a, 7b in diesem Fall direkt auf der Schräge der Küchenspüle aufliegen können. Dabei weisen die Fortsätze 7a, 7b eine geringere Erstreckung in die Richtung 11 auf, als die Erstreckung der Querstreben 4a, 4b in derselben Richtung.

An beziehungsweise in den Eckbereichen des Rahmens 2 ist eine Aufnahmeeinrichtung 12, hier mit inneren Vorsprüngen 13a-d ausgebildet. Die Aufnahmeeinrichtung 12 ist dazu ausgelegt, ein Zubehörteil aufzunehmen. Die inneren Vorsprünge 13a-d weisen eine geringere Dicke als die Dicke des Rahmens 2 auf und sind insbesondere bezogen auf die Dicke des Rahmens 2, gemessen senkrecht zur Ebene 10 des Rahmens 2, mittig angeordnet. Das heißt, dass zwischen einer Oberseite 2' des Rahmens 2 und den inneren Vorsprüngen 13a-d eine Stufe 22 gebildet ist und/oder dass zwischen einer Unterseite des Rahmens (nicht gezeigt) und den inneren Vorsprüngen 13a-d eine Stufe (nicht gezeigt) gebildet ist. Die inneren Vorsprünge 13a-d sind im Wesentlichen in Form eines abgerundeten Dreiecks ausgebildet, die jeweils mit einer Kante an einer Querstrebe 4a, 4b und mit einer weiteren Kante an einer Längsstrebe 3a, 3b angeordnet sind.

Der Rahmen 2 und/oder die Anlageelemente 5a, 5b können aus Edelstahl hergestellt sein, wobei die Anlageelemente 5a, 5b und/oder die Querstreben 4a, 4b mit Kunststoff umspritzt sein können.

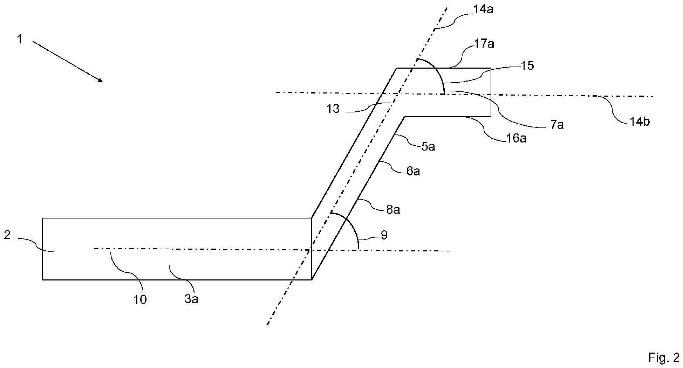

Figur 2 zeigt in schematischer Form einen Querschnitt des Adapters gemäß Figur 1 gemäß einer Ausführungsform der vorliegenden Erfindung.

In Figur 2 wird ein Ausschnitt des Adapters 1 gemäß Figur 1 in einer Vorderansicht gezeigt. Der Fortsatz 7a ist an dem Vorsprung 6a angeordnet. Der Vorsprung 6a umfasst eine Schräge 8a. Dies bedeutet, dass eine, insbesondere maximale, Erstreckungsrichtung 14a des Vorsprungs 6a einen Winkel 9 mit einer Ebene 10 entlang der Längsstrebe 3a und/oder entlang des Rahmens 2 aufweist. Die Schräge 8a dient dazu, einen Anschlag für den Adapter 1 bereitzustellen, wenn der Adapter 1 in ein Sanitärbecken eingesetzt ist. Insbesondere kann das Sanitärbecken eine zu der Schräge 8a korrespondierende Schräge aufweisen, an der die Schräge 8a anliegen kann. Weiterhin wird durch die Schräge 8a ein Höhenunterschied zwischen dem Fortsatz 7a und dem Längsträger 3a realisiert. Durch den Höhenunterschied kann der Fortsatz 7a als Griff genutzt werden, um den Adapter 1 anheben zu können.

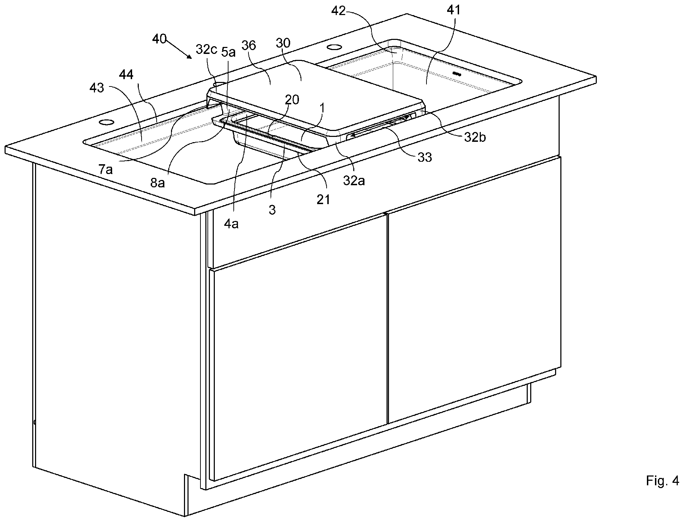

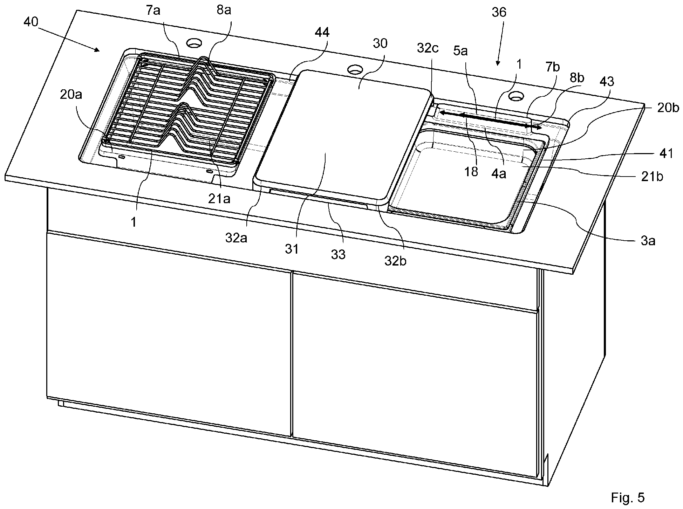

Der Fortsatz 7a erstreckt sich entlang einer, insbesondere maximalen, Erstreckungsrichtung 14b. Insbesondere erstreckt sich der Fortsatz 7a derart, dass ein Winkel 15 zwischen der Erstreckungsrichtung 14a des Vorsprungs 6a und der Erstreckungsrichtung 14b des Fortsatzes 7a annähernd dem Winkel 9 zwischen der Erstreckungsrichtung 14a des Vorsprungs 6a und der Ebene 10 der Längsstrebe 3a entspricht. Mit anderen Worten ist die Erstreckungsrichtung 14b des Fortsatzes 7a im Wesentlichen parallel zu der Ebene 10. Somit kann der Adapter 1 mittels einer Unterseite 16a des Fortsatzes 7a auf einer entsprechenden horizontalen Stufe eines Sanitärbeckens (siehe Figuren 4 und 5) angeordnet werden. Es ist ebenfalls möglich, den Adapter 1 umzudrehen und den Adapter 1 mit der Oberseite 17a des Fortsatzes 7a auf einem Sanitärbecken anzuordnen. Es ist ebenfalls denkbar, dass die Unterseite 16a und die Oberseite 17a des Fortsatzes 7a nicht parallel sind, sondern beide unter einem Winkel zu der Haupterstreckungsrichtung 14b angeordnet sind. Dabei können die Oberseite 17a und die Unterseite 16a spitz aufeinander zulaufen und denselben Winkel mit der Haupterstreckungsrichtung 14b einschließen, sodass der Adapter 1 sowohl mit der Oberseite 17a als auch mit der Unterseite 16a auf einem schrägen Rand einer Spüle anordenbar sind.

Insbesondere kann ein zweites Anlageelement 5b (nicht gezeigt) analog zu dem Anlageelement 5a gemäß Figur 2 ausgebildet sein.

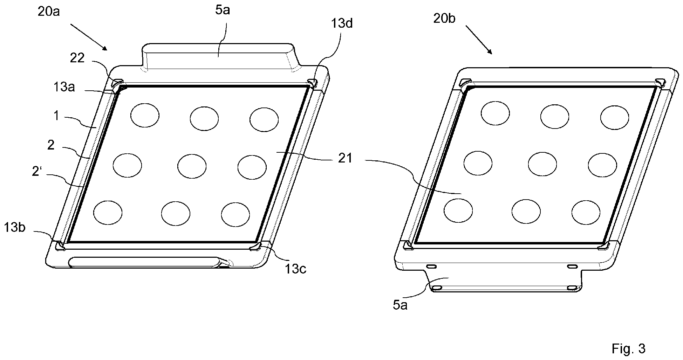

Figur 3 zeigt in schematischer Form ein Sanitärteil in zwei Anordnungen des Adapters gemäß einer Ausführungsform der vorliegenden Erfindung.

Figur 3 zeigt zwei Anordnungen eines Sanitärteils 20a, 20b. Das Sanitärteil 20a umfasst einen Adapter 1 gemäß Figur 1. Auf den inneren Vorsprüngen 13a-d ist ein Zubehörteil 21 angeordnet, beispielsweise ein Sieb. Das Zubehörteil 21 liegt dabei auf den inneren Vorsprüngen 13a-d auf. Da die Vorsprünge 13a-d nicht bündig mit der Oberseite 2' des Adapters 1 abschließen, entsteht jeweils eine Stufe 22 zwischen den Vorsprüngen 13a-d und dem Rahmen 2 des Adapters 1. Somit kann das Zubehörteil 21 in den Rahmen 2 eingelegt werden und wird von unten durch die inneren Vorsprünge 13a-d und seitlich durch den Rahmen 2 gehalten.

Das Sanitärteil 20b ist im Gegensatz zu dem Sanitärteil 20a in einer umgedrehten Variante dargestellt, das heißt, dass das Anlageteil 5a des Sanitärteils 20b in die entgegengesetzte Richtung ausgerichtet ist wie das das Anlageteil 5a des Sanitärteils 20a. Das Zubehörteil 21 ist bei dem Sanitärteil 20b ebenfalls auf den Vorsprüngen 13a-d aufgelegt, jedoch auf der entgegengesetzten Seite im Vergleich zu der Anordnung gemäß Sanitärteil 20a. Das heißt, dass das Zubehörteil 21 auf beiden Seiten der inneren Vorsprünge 13a-d angeordnet werden kann. Insbesondere kann dasselbe Zubehörteil 21 bei beiden Anordnungen der Sanitärteile 20a, 20b angeordnet werden.

Figur 4 zeigt ein Sanitärbecken gemäß einer Ausführungsform der vorliegenden Erfindung.

Das Sanitärbecken 40 umfasst ein Becken 41 zur Aufnahme von Geschirr, Spülwasser oder dergleichen, wobei das Becken 41 einen umlaufenden Bereich 42 aufweist. Der umlaufende Bereich 42 ist an einer Oberseite des Beckens 41 angeordnet und umfasst eine Schräge 43 und eine an die Schräge 43 angrenzende horizontale Auflagefläche 44. Die horizontale Auflagefläche 44 ist insbesondere entlang des gesamten Umfangs des Beckens 41 ausgebildet. Es ist ebenfalls denkbar, dass die horizontale Auflagefläche 44 einen ersten Auflageflächenbereich und einen zweiten dem ersten Auflageflächenbereich gegenüber angeordneten Auflageflächenbereich umfasst, die insbesondere getrennt voneinander angeordnet sind.

Auf der horizontalen Auflagefläche 44 ist ein System 36 angeordnet. Das System 36 umfasst ein Sanitärteil 20, insbesondere ein Sanitärteil gemäß Figur 3 und ein weiteres Zubehörteil 30 in Form eines Schneidbretts. Das Sanitärteil 20 wiederum umfasst einen Adapter 1 mit einem Anlageelement 5a, wobei der Adapter 1 insbesondere gemäß dem Adapter 1 gemäß Figur 1 ausgebildet sein kann. Das Anlageelement 5 liegt mit einem Fortsatz 7a auf der horizontalen Auflagefläche 44 auf und liegt mit einer Schräge 8a an der Schräge 43 des Beckens 41 an. Insbesondere korrespondiert die Schräge 43 des Beckens 41 mit der Schräge 8a des Adapters 1. Mit anderen Worten sind die Schräge 43 des Beckens 41 und die Schräge 8a des Adapters 1 parallel zueinander angeordnet. Es ist denkbar, dass die Schräge 8a des Adapters 1 nicht an der Schräge 43 des Beckens 41 direkt anliegt, sondern von dieser beabstandet ist. Mit anderen Worten ist ein Spalt zwischen der Schräge 8a des Adapters 1 und der Schräge 43 des Beckens 41 vorgesehen.

Das weitere Zubehörteil 30 liegt ebenfalls auf der Auflagefläche 44 auf, insbesondere sind Füße 32a-d auf der Auflagefläche 44 angeordnet (Fuß 32d ist nicht gezeigt). Das weitere Zubehörteil 30 ist dabei über dem Sanitärteil 20 angeordnet. Dies ist möglich, da der jeweilige Freiraum 33 zwischen den Füßen 32a, 32b beziehungsweise zwischen den Füßen 32c, 32d größer ist als die Erstreckung des Anlageelements 5 in Richtung einer Querstrebe 4a. Dies gilt insbesondere auch für das gegenüberliegende Anlageelement. Somit kann das weitere Zubehörteil 30 über dem Sanitärteil 20 angeordnet werden und gleichzeitig direkt auf dem Becken 41, insbesondere der Auflagefläche 44, aufliegen. In diesem Zustand kann das weitere Zubehörteil 30 direkt genutzt werden, beispielsweise indem Gemüse auf dem weiteren Zubehörteil 30 geschnitten wird. Gleichzeitig benötigt es lediglich wenig zusätzlichen Platz, da es direkt über dem Sanitärteil 20 angeordnet ist. Alternativ kann es neben dem Sanitärteil 20 angeordnet werden, sodass sowohl das Sanitärteil 20 als auch das weitere Zubehörteil 30 verwendet werden können. Es ist hingegen insbesondere nicht möglich, dass das weitere Zubehörteil 30 entlang der Auflagefläche 44 über das Sanitärteil 20 geschoben wird.

Es ist ebenfalls denkbar, dass das Anlageelement 5 nicht mit einem Fortsatz 7a auf der horizontalen Auflagefläche 44 aufliegt, sondern mit der Schräge 8a des Adapters an der Schräge 43 der Beckens 41 anliegt. In diesem Fall kann die Schräge 8a des Adapters eine geringe Erstreckung als der Adapter 1 aufweisen, sodass das weitere Zubehörteil weiterhin über den Adapter 1 gestellt werden kann.

Insbesondere weisen das weitere Zubehörteil 30 und das Sanitärteil 20 dieselbe Erstreckung entlang einer Richtung der maximalen Erstreckung eines Längsträgers 3 des Adapters 1 des Sanitärteils 20 auf. Es ist denkbar, dass das weitere Zubehörteil 30 und das Sanitärteil 20 dieselbe Erstreckung entlang einer Richtung der maximalen Erstreckung eines Querträgers 4a aufweisen.

Figur 5 zeigt ein weiteres Sanitärbecken gemäß einer Ausführungsform der vorliegenden Erfindung.

In Figur 5 ist ein Sanitärbecken 40 gezeigt, das insbesondere dem Sanitärbecken 40 gemäß Figur 4 entsprechen kann. Auf dem Sanitärbecken 40 ist ein System 36, umfassend ein weiteres Zubehörteil 30 und zwei Sanitärteile 20a, 20b gezeigt. Die Sanitärteile 20a, 20b umfassen jeweils einen Adapter 1 und ein Zubehörteil 21a, 21b in Form eines Abtropfgitters oder einer Schale. Insbesondere kann der Adapter 1 des Sanitärteils 20a dem Adapter 1 des Sanitärteils 20b entsprechen.

Der Adapter 1 des Sanitärteils 20b ist in einer ersten Ausführungsform auf einer Auflagefläche 44 angeordnet. Dabei liegt ein Fortsatz 7b des Sanitärteils 20b auf der Auflagefläche 44 auf und eine Schräge 8b des Sanitärteils 20b ist an einer Schräge 43 des Beckens 41 angeordnet.

Der Adapter 1 des Sanitärteils 20a ist in einer zweiten Ausführungsform auf der Auflagefläche 44 angeordnet. Dabei liegt ein Fortsatz des Sanitärteils 20a auf der Auflagefläche 44 auf, jedoch ist die Schräge 8a des Sanitärteils 20a nicht an der Schräge 43 des Beckens 41 angeordnet. Hierdurch ist das Zubehörteil 21a des Sanitärteils 20a höher angeordnet als das Zubehörteil 21b des Sanitärteils 20b. Somit können durch einen Adapter 1 zwei verschiedene Höhen des Zubehörteils 21a, 21b realisiert werden. Insbesondere können durch den Adapter 1 Zubehörteile 21a, 21b auf verschiedenen Höhen angeordnet werden, ohne dass unterschiedlich hohe Auflageflächen 44 benötigt werden.

Das weitere Zubehörteil 30 umfasst eine im Wesentlichen rechteckförmige Arbeitsfläche 31, hier in Form einer Arbeitsplatte 31, und vier Füße, wobei in Figur 5 lediglich drei Füße 32a, 32b, 32c gezeigt sind. Die Füße 32a, 32b, 32c sind auf einer Unterseite der Arbeitsplatte 31 angeordnet. Insbesondere kann das weitere Zubehörteil 30 in Form eines Schneidbretts ausgebildet sein.

Der Adapter 1 umfasst ein Anlageelement 5a, das eine maximale Erstreckung 18 aufweist, wobei sich die maximale Erstreckung 18 insbesondere parallel zu einer Querstrebe 4a des Adapters 1 erstreckt. Das weitere Zubehörteil 30 umfasst zwischen den Füßen 32a, 32b einen Freiraum 33, der sich entlang der Richtung der maximalen Erstreckung 18 erstreckt und größer ist als die maximale Erstreckung 18 des Anlageelements 5a. Mit anderen Worten ist der Freiraum 33 zwischen den Füßen 32a, 32b größer als das Anlageelement 5a. Somit kann das weitere Zubehörteil 30 über dem Adapter 1 angeordnet werden, ohne dass das weitere Zubehörteil 30 auf dem Anlageelement 5a aufliegt. Das weitere Zubehörteil 30 kann derart über dem Sanitärteil 20 angeordnet werden, dass sich die beiden Füße 32a, 32b jeweils auf unterschiedlichen Seiten des Anlageelements 5a befinden und dabei nicht auf dem Anlageelement 5a aufliegen. Insbesondere können das weitere Zubehörteil 30 und das Sanitärteil 20a, 20b gemeinsam verschoben werden, da ein Verschieben des Zubehörteils 30 direkt eine Verschiebung des Sanitärteils 20a, 20b bedingt.

Zusammenfassend kann zumindest eine Ausführungsform der vorliegenden Erfindung zumindest eines der folgenden Merkmale aufweisen und/oder zumindest einen der folgenden Vorteile bereitstellen:
- Platzsparende Anordnung von verschiedenen Zubehörteilen.
- Sichere Anordnung von verschiedenen Zubehörteilen.
- Anordnung von Zubehörteilen auf unterschiedlichen Höhen.

Obwohl die vorliegende Erfindung anhand bevorzugter Ausführungsbeispiele beschrieben wurde, ist sie nicht darauf beschränkt, sondern auf vielfältige Weise modifizierbar.

### Bezugszeichenliste

- 1: Adapter
- 2: Rahmen
- 2': Oberseite des Rahmens
- 3, 3a, 3b: Längsstrebe
- 4a, 4b: Querstrebe
- 5, 5a, 5b: Anlageelement
- 6a, 6b: Vorsprünge
- 7a, 7b: Fortsätze
- 8, 8a, 8b: Schräge
- 9: Winkel
- 10: Ebene
- 11: Richtung
- 12: Aufnahmeeinrichtung
- 13a, 13b, 13c, 13d: Innere Vorsprünge
- 14a, 14b: Erstreckungsrichtung
- 15: Winkel
- 16a: Unterseite
- 17a: Oberseite
- 18: Erstreckung der Anlageelemente
- 19: Erstreckung des Adapters
- 20, 20a, 20b: Sanitärteil
- 21, 21a, 21b: Zubehörteil
- 22: Stufe
- 23: Freiraum

- 30: Zubehörteil
- 31: Arbeitsplatte
- 32a, 32b, 32c, 32d: Füße
- 33: Freiraum
- 36: System
- 40: Sanitärbecken
- 41: Becken
- 42: Umlaufender Bereich
- 43: Schräge des umlaufenden Bereichs
- 44: Horizontaler Auflagebereich

## Patentansprüche

1. Adapter (1) für ein Zubehörteil (21, 21a, 21b) eines Sanitärbeckens (40), insbesondere für ein Zubehörteil (21, 21a, 21b) eines Spülbeckens, umfassend eine Aufnahmeeinrichtung (12) zum Aufnehmen des Zubehörteils (21, 21a, 21b) und zumindest zwei Anlageelemente (5, 5a, 5b) mit jeweils einem Fortsatz (7a, 7b) zur Auflage auf und/oder Anlage an zumindest einem, insbesondere schrägen, Rand (44) des Sanitärbeckens (40), wobei eine maximale Erstreckung (18) zumindest einer der Fortsätze (7a, 7b) eine Richtung (11) definiert, entlang derer die Erstreckung (18) des zumindest einen Fortsatzes (7a, 7b) kleiner ist als die Erstreckung (19) des Adapters (1) in dieselbe Richtung (11).

2. Adapter (1) gemäß Anspruch 1, **dadurch gekennzeichnet, dass** der Adapter (1) einen im Wesentlichen rechteckigen Rahmen (2) aufweist, wobei der Rahmen (2) jeweils zumindest zwei Querträger (4a, 4b) und zumindest zwei Längsträger (3a, 3b) umfasst.

3. Adapter (1) gemäß Anspruch 2, **dadurch gekennzeichnet, dass** die Anlageelemente (5, 5a, 5b) jeweils an einem Querträger (4a, 4b) angeordnet sind.

4. Adapter (1) gemäß einem der Ansprüche 1 bis 3, **dadurch gekennzeichnet, dass** die Anlageelemente (5, 5a, 5b) jeweils einen Vorsprung (6a, 6b) umfassen, der insbesondere jeweils eine Schräge (8, 8a, 8b) aufweist, wobei jeweils einer der Fortsätze (7a, 7b) an einem der Vorsprünge (6a, 6b) angeordnet ist.

5. Adapter (1) gemäß einem der Ansprüche 2 bis 4, **dadurch gekennzeichnet, dass** die Aufnahmeeinrichtung (12) zumindest einen inneren Vorsprung (13a, 13b, 13c, 13d), insbesondere wobei der innere Vorsprung (13a, 13b, 13c, 13d) abgerundet ist, umfasst, wobei dieser in einem Eckbereich des Rahmens (2) angeordnet ist.

6. Adapter (1) gemäß einem der Ansprüche 2 bis 5, **dadurch gekennzeichnet, dass** der Rahmen (2) und/oder zumindest eines der Anlageelemente (5, 5a, 5b) aus Edelstahl und/oder Kunststoff hergestellt ist.

7. Adapter (1) gemäß einem der Ansprüche 2 bis 6, **dadurch gekennzeichnet, dass** die Querträger (4a, 4b) und/oder die Anlageelemente (5, 5a, 5b) mit einem Kunststoff umspritzt sind.

8. Adapter (1) gemäß einem der Ansprüche 1 bis 7, **dadurch gekennzeichnet, dass** die Fortsätze (7a, 7b) eine Oberseite (17a) und eine hierzu parallele Unterseite (16b) aufweisen oder dass Fortsätze (7a, 7b) eine Oberseite (17a) und eine Unterseite (16b) aufweisen, die jeweils unter demselben Winkel zu einer Haupterstreckungsrichtung der Fortsätze (7a, 7b) aufeinander zulaufen, insbesondere wobei die Oberseite (17a) und die Unterseite (16a) jeweils die gleiche horizontale Erstreckung aufweisen.

9. Adapter (1) gemäß einem der Ansprüche 1 bis 8, **dadurch gekennzeichnet, dass** der Adapter (1) stapelbar ausgebildet ist, sodass zwei Adapter (1) übereinander stapelbar sind, deren Gesamthöhe kleiner ist als die Summe ihrer einzelnen Höhen.

10. Adapter (1) gemäß einem der Ansprüche 1 bis 9, **dadurch gekennzeichnet, dass** die Aufnahmeeinrichtung (12) dazu ausgebildet ist, das Zubehörteil (21, 21a, 21b) auf einer Unterseite und auf einer Oberseite der Aufnahmeeinrichtung (12) aufzunehmen.

11. Sanitärteil umfassend einen Adapter (1) gemäß einem der Ansprüche 1 bis 10, wobei ein Zubehörteil (21, 21a, 21b) eines Sanitärbeckens (40) an und/oder in der Aufnahmeeinrichtung (12) angeordnet ist.

12. System (36) aus zumindest einem Sanitärteil gemäß Anspruch 11 und zumindest einem weiteren Zubehörteil (30), wobei das weitere Zubehörteil (30) eine Arbeitsfläche (31) und zumindest zwei, insbesondere vier, auf einer Unterseite der Arbeitsfläche (31) angeordnete Füße (32a, 32b, 32c, 32d) umfasst, wobei zwischen zwei Füßen (32a, 32b, 32c, 32d) in einer Richtung ein Freiraum (33) vorgesehen ist, dessen Erstreckung in der Richtung (11) größer als eine Erstreckung eines Anlageelements (5, 5a, 5b) und/oder eines Fortsatzes (7a, 7b) des Adapters (1) in der Richtung (11) ist.

13. Sanitärbecken (40), insbesondere ein Spülbecken, mit einem System (36) gemäß Anspruch 12, wobei das Sanitärbecken (40) eine erste Auflagefläche (44) und eine zweite Auflagefläche (44) umfasst, wobei die erste Auflagefläche (44) gegenüber der zweiten Auflagefläche (44) angeordnet ist.

14. Sanitärbecken (40) gemäß Anspruch 13, **dadurch gekennzeichnet, dass** der Adapter (1) ausgebildet ist, in einem aufliegenden Zustand, in dem der Adapter (1) mit den Fortsätzen (7a, 7b) auf der ersten und zweiten Auflagefläche (44) aufliegt, lediglich mit den Fortsätzen (7a, 7b) in Kontakt mit dem Sanitärbecken (40) zu stehen.
